# FASCICULE DE BREVET EUROPEEN

(11) **EP 3 218 306 B1**
(45) Date de publication et mention de la délivrance du brevet: **02.05.2018**
(21) Numéro de dépôt: 15760222.8
(22) Date de dépôt: 24.08.2015
(51) Int. Cl.: C01B 35/12, H01M 4/505, H01M 4/525, H01M 4/58, H01M 10/0525

(54) **MATERIAU D'ELECTRODE DE FORMULE LIMNXCO(1-X)BO3, ET SON PROCEDE DE PREPARATION**
ELEKTRODENMATERIAL DER FORMEL LIMNXCO(1-X)BO3 UND HERSTELLUNGSVERFAHREN DAFÜR
ELECTRODE MATERIAL OF FORMULA LIMNXCO(1-X)BO3, AND PRODUCTION METHOD THEREOF

(30) Priorité: 17.10.2014 FR 1460002
(43) Date de publication de la demande: 20.09.2017
(73) Titulaire: Commissariat à l'Énergie Atomique et aux Énergies Alternatives, 75015 Paris (FR)
(72) Inventeur: LE ROUX, Barbara, F-38000 Grenoble (FR); BOURBON, Carole, F-38590 Saint Michel de Saint Geoirs (FR); PRALONG, Valérie, F-14000 Caen (FR); COLIN, Jean-François, F-38240 Meylan (FR)
(74) Mandataire: Cabinet Laurent & Charras
(86) Numéro de dépôt international: PCT/FR2015/052252
(87) Numéro de publication internationale: WO 2016/059305

(56) Documents cités:
- ATSUO YAMADA ET AL: "Synthesis and electrochemistry of monoclinic Li(MnxFe1-x)BO3: a combined experimental and computational study", JOURNAL OF MATERIALS CHEMISTRY, vol. 21, no. 29, 1 janvier 2011 (2011-01-01), page 10690, XP055017799, ISSN: 0959-9428, DOI: 10.1039/c1jm11131k
- V. LEGAGNEUR: "LiMBO3 (M=Mn, Fe, Co): synthesis, crystal structure and lithium deinsertion/insertion properties", SOLID STATE IONICS, vol. 139, no. 1-2, 2 janvier 2001 (2001-01-02), pages 37-46, XP055109920, NL ISSN: 0167-2738, DOI: 10.1016/S0167-2738(00)00813-4
- BELKÉBIR A ET AL: "Synthesis, structural and vibrational analysis of LiMBO orthoborates (M=Mg, Co, Zn)", NEW JOURNAL OF CHEMISTRY, ROYAL SOCIETY OF CHEMISTRY, GB, vol. 20, no. 3, 1 janvier 1996 (1996-01-01), pages 311-316, XP008176900, ISSN: 1144-0546

## Description

### DOMAINE DE L'INVENTION

La présente invention concerne un matériau à base de lithium-borate de formule LiMnₓCo₁₋ₓBO₃, ainsi que son utilisation en tant que matériau d'électrode et son procédé de préparation.
Le domaine d'application de ce matériau concerne le stockage de l'énergie, et plus particulièrement les batteries lithium-ion.

### ETAT ANTERIEUR DE LA TECHNIQUE

Au cours des dernières décennies, différents types de batteries ont été développés afin de répondre aux exigences de taille, de poids et de capacité requises en fonction de la nature des dispositifs électroniques. Par exemple, les batteries lithium-ion s'avèrent particulièrement adaptées aux équipements électroniques portables en termes de densité énergétique et de stabilité dans le temps (cycles de charge / décharge).

De manière générale, une batterie lithium-ion est un assemblage d'une électrode positive (cathode), comprenant un matériau à base de lithium, et d'une électrode négative (anode), généralement à base de carbone (graphite par exemple). Son fonctionnement est assuré par l'échange réversible d'ions Li⁺ entre la cathode et l'anode, ces électrodes étant séparées par un électrolyte à base de sel de lithium.
Au cours du développement des batteries lithium-ion, de nombreux matériaux d'électrode positive ont été testés, notamment les phosphates LiMPO₄ (M= Mn, Fe, ou Co). Ces matériaux sont avantageux et suscitent beaucoup d'intérêts eu égard à la sécurité qu'ils offrent et à leur faible coût. Cependant, leur capacité spécifique théorique reste limitée à 170mAh/g pour LiFePO₄.
Dans le but d'obtenir des batteries ayant des capacités spécifiques plus élevées, d'autres matériaux ont été envisagés, notamment les borates LiMBO₃, avec M = Mn, Fₑ, ou Co (voir par exemple les articles suivants: "Synthesis and electrochemistry of monoclinic Li(MnxFe1-x)BO3: a combined experimental and computational study" de A. Yamada et al., J. Mater. Chem., 2011, 21, 10690-10696 et "LiMBO3 (M = Mn, Fe, Co): synthesis, crystal structure and lithium deinsertion/insertion properties" de V. Legagneur et al., Solid State Ionics, 2001, 139, 37-46). Ces matériaux présentent l'avantage de présenter une capacité théorique maximale (220mAh/g) supérieure à celle des phosphates LiMPO₄, tout en étant aussi attrayants en termes de sécurité.

Toutefois, les potentiels redox des couples Fe²⁺/Fe³⁺ et Mn²⁺/Mn³⁺ sont relativement bas, ce qui a pour conséquence de limiter la densité énergétique des composés LiFeBO₃ et LiMnBO₃.

Le composé LiCoBO₃ permet d'améliorer la densité énergétique, étant donné que le couple redox Co²⁺/Co³⁺ du cobalt possède un potentiel plus élevé que celui des couples Fe²⁺/Fe³⁺ et Mn²⁺/Mn³⁺. Néanmoins, l'inconvénient du composé LiCoBO₃, par rapport aux composés LiFeBO₃ et LiMnBO₃, est qu'il présente une capacité réversible expérimentale assez faible.

Ainsi, se présente le besoin d'améliorer les propriétés des matériaux lithium-borate, en développant un matériau qui présente les propriétés suivantes :
- un potentiel moyen plus élevé ;
- une bonne capacité spécifique massique ; et
- une bonne stabilité au cours du temps vis-à-vis des cycles de charge / décharge.

La présente invention concerne des composés lithium-borate, dont les propriétés permettent de résoudre ce problème. Ils comprennent à la fois les deux métaux de transition, manganèse et cobalt.

En outre, le Demandeur a constaté que les procédés de l'art antérieur ne permettent pas de préparer de tels composés comprenant à la fois des borates de manganèse et de cobalt lithiés. Ces procédés ne conduisent pas à la formation d'une seule phase contenant le manganèse et le cobalt.

Afin de remédier à cette difficulté technique, le Demandeur a mis au point un nouveau procédé en plusieurs étapes prenant en considération les éventuelles incompatibilités relatives aux réactivités respectives des composés de cobalt et de manganèse.

### EXPOSE DE L'INVENTION

La présente invention a pour objet un matériau lithium-borate contenant à la fois du manganèse et du cobalt. La substitution partielle du manganèse par du cobalt dans le matériau LiMnBO₃ permet d'améliorer la densité énergétique.

Ce matériau peut servir dans divers champs d'application, notamment dans le domaine du stockage de l'énergie. Il s'avère particulièrement attrayant pour constituer le matériau électroniquement actif de la cathode d'une batterie lithium-ion.

Plus précisément, la présente invention a pour objet un matériau de formule LiMnₓCo₁₋ₓBO₃ dans laquelle 0 < x < 1.

De manière avantageuse, x est strictement supérieur à 0 et inférieur ou égal à 0,7, et plus avantageusement x = 0,7.

Ce matériau se présente sous forme cristalline et cristallise dans une maille monoclinique.

Comme déjà indiqué, la substitution partielle du manganèse ou du fer dans les matériaux de type LiMBO₃ (M = Mn ou Fe) avec du cobalt permet d'augmenter le potentiel de réaction du matériau lithium-borate. Ainsi, cette substitution partielle permet d'augmenter la densité énergétique de ce matériau.

Le matériau LiMnₓCo₁₋ₓBO₃ (0 < x < 1) présente donc les propriétés requises pour pouvoir être utilisé en tant que matériau d'électrode, que ce soit en termes de sécurité ou de capacité spécifique massique. Ces avantages sont liés à la présence du borate BO₃ mais aussi au potentiel redox du couple Co²⁺/Co³⁺, plus élevé que ceux des couples Fe²⁺/Fe³⁺ et Mn²⁺/Mn³⁺.

Ce matériau est particulièrement adapté pour constituer le matériau d'une cathode, notamment d'une batterie lithium-ion.

Il présente une capacité spécifique massique théorique comprise entre 215 et 222 mAh/g.

La présente invention a en outre pour objet une batterie lithium-ion comprenant le matériau de formule LiMnₓCo₁₋ₓBO₃ (0 < x < 1) en tant que matériau actif d'électrode, avantageusement la cathode.

La présente invention a également pour objet un procédé de préparation par voie solide d'un matériau de formule LiMnₓCo₁₋ₓBO₃ (avec 0 < x < 1, avantageusement 0 < x ≤ 0,7), comprenant les étapes suivantes :
a) préparation d'un borate de manganèse à partir d'un mélange d'un composé de manganèse et d'un composé de bore par :
   a1) broyage d'un mélange d'un composé de manganèse et d'un composé de bore ;
   a2) traitement thermique de ce mélange (broyat) sous atmosphère inerte, avantageusement sous argon, à une température comprise entre 300 et 900°C ;
b) préparation d'un borate de cobalt à partir d'un mélange d'un composé de cobalt et d'un composé de bore par :
   b1) broyage d'un mélange d'un composé de cobalt et d'un composé de bore ;
   b2) traitement thermique de ce mélange (broyat) sous atmosphère oxydante, de préférence sous air, à une température comprise entre 300 et 1000°C ;
c) préparation d'un mélange contenant le borate de manganèse, le borate de cobalt, un précurseur de lithium et de l'acide borique ;
d) traitement thermique du mélange ainsi obtenu sous atmosphère inerte ;
e) obtention du matériau de formule LiMnₓCo₁₋ₓBO₃, avec 0 < x < 1.

Le traitement thermique de l'étape d) peut être précédé d'une étape de broyage.

Dans les deux étapes a) et b), le composé de bore mis en oeuvre peut être identique ou différent.

Dans l'étape a) le rapport molaire entre le composé de manganèse et le composé de bore est avantageusement compris entre 0,6 et 1,2, plus avantageusement entre 0,8 et 1.

Par rapport molaire, on entend le rapport molaire entre la quantité molaire de manganèse et la quantité molaire de bore.

De manière avantageuse, le composé de manganèse utilisé dans l'étape a) peut être choisi dans le groupe comprenant : oxalate de manganèse (MnC₂O₄ sous sa forme hydratée ou non) ; carbonate de manganèse (MnCO₃) ; et oxyde de manganèse (II) (MnO). Il peut également s'agir d'un mélange de ces composés.

De manière avantageuse, il s'agit de l'oxalate de manganèse.

Dans l'étape b), le rapport molaire entre le composé de cobalt et le composé de bore est avantageusement compris entre 0,6 et 1,2, plus avantageusement entre 0,8 et 1.

Par rapport molaire, on entend le rapport molaire entre la quantité molaire de cobalt et la quantité molaire de bore.

De manière avantageuse, le composé de cobalt utilisé dans l'étape b) peut être choisi dans le groupe comprenant : oxalate de cobalt (CoC₂O₄ sous sa forme hydratée ou non) ; carbonate de cobalt (CoCO₃) ; et oxyde de cobalt (II) (CoO). Il peut également s'agir d'un mélange de ces composés.

De manière avantageuse, il s'agit de l'oxalate de cobalt.

Les composés de bore mis en oeuvre dans les étapes a) et b) sont avantageusement, et indépendamment l'un de l'autre, l'oxyde de bore (B₂O₃) ou l'acide borique (H₃BO₃). Il peut également s'agir d'un mélange de ces composés.

De manière avantageuse, il s'agit du B₂O₃.

Le broyage des étapes a1) et b1) peut s'effectuer par tout moyen adapté et connu de l'homme du métier. Il permet de réduire les composés solides de manganèse, cobalt et bore en poudre fine.

Le broyage permet non seulement d'obtenir une poudre fine et homogène, mais aussi d'augmenter la surface spécifique de ces composés et donc d'améliorer leur réactivité.

De manière avantageuse, le broyage des étapes a1) et/ou b1) peut être effectué dans un broyeur à billes conventionnel.

Selon un mode de réalisation particulier, lorsque le broyeur utilisé est un broyeur à billes, la vitesse de rotation du broyeur est avantageusement comprise entre 100 et 900 tours/minute, plus avantageusement entre 250 et 750 tours/minute. Elle peut notamment être égale à 500 tours/minute.

De manière avantageuse, la durée du broyage des étapes a1) et/ou b1) est avantageusement comprise entre 0,5 et 24 heures, plus avantageusement entre 1 et 12 heures. Elle peut notamment être égale à 5 heures.

De manière préférentielle, le broyat résultant de l'étape a1) ou b1) se présente sous la forme d'une poudre ayant un diamètre moyen de grain avantageusement compris entre 0,1 et 30 micromètres, et plus avantageusement entre 0,5 et 10 micromètres.

Les conditions de broyage des étapes a1) et b1) sont indépendantes les unes des autres. En d'autres termes, les conditions de broyage pour le manganèse ne sont pas nécessairement les mêmes que pour le cobalt. En outre, le diamètre moyen de grain du mélange issu de l'étape a1) (manganèse) n'est pas nécessairement le même que celui du mélange issu de l'étape b1) (cobalt).

Le traitement thermique (calcination) de l'étape a2) ou b2) qui suit l'étape a1) ou b1) de mélange (et avantageusement de broyage), permet au composé de manganèse ou de cobalt de réagir avec le composé de bore afin de produire un borate de manganèse ou un borate de cobalt.

Comme déjà indiqué, le traitement thermique des étapes a2) et b2) est réalisé sous atmosphère différente pour chaque matériau :
a2) sous atmosphère inerte (avantageusement sous argon) pour éviter l'oxydation du manganèse II+ en manganèse III+ ; et
b2) sous air pour éviter la réduction du cobalt II+ qui se produit assez facilement à des températures supérieures ou égales à 500°C sous atmosphère inerte notamment avec les précurseurs de cobalt utilisés.

Pour ces raisons, les borates de manganèse et de cobalt (M₃B₂O₆) sont préparés séparément, préalablement à la synthèse du composé LiMnₓCo₁₋ₓBO₃ par traitement thermique ultérieur sous atmosphère inerte lors de l'étape d) et ce sans réduire le cobalt II+ en cobalt métallique.

De manière préférentielle, le traitement thermique selon l'étape a2) consiste à chauffer le mélange issu de l'étape a1) à une température comprise entre 300 et 900°C, plus avantageusement entre 500 et 800°C. La température peut être comprise entre 600 et 750°C, notamment lorsque le traitement thermique est une trempe thermique telle que décrite ci-après.

De manière préférentielle, le traitement thermique selon l'étape b2) consiste à chauffer le mélange issu de l'étape b1) à une température comprise entre 300 et 1000°C, plus avantageusement entre 550 et 850°C. La température peut être comprise entre 700 et 850°C, notamment lorsque le traitement thermique est une trempe thermique telle que décrite ci-après.

La température du traitement thermique (a2 et/ou b2) est atteinte en appliquant une vitesse de chauffe, avantageusement comprise entre 1 et 20°C/minute, plus avantageusement entre 2 et 10°C/minute.

La durée du traitement thermique (a2 et/ou b2) est avantageusement comprise entre 5 et 1200 minutes, plus avantageusement entre 5 et 20 minutes, et encore plus avantageusement entre 5 et 15 minutes.

De manière avantageuse, le traitement thermique (a2 et/ou b2) peut être une étape de trempe thermique, c'est-à-dire un traitement ne comprenant pas de montée en température progressive.

A l'issue de l'étape a2) ou b2), le borate de manganèse ou de cobalt est refroidi. La vitesse de refroidissement est avantageusement comprise entre 2 et 20°C/minute, plus avantageusement entre 5 et 10°C/minute, jusqu'à atteindre la température ambiante.

De manière avantageuse, le refroidissement est une étape de trempe à l'air, c'est-à-dire un traitement ne comprenant pas de baisse de température progressive. Il s'agit alors du passage instantané de la température de traitement thermique à la température ambiante. Pour le borate de manganèse, il s'agit d'une trempe à l'air du récipient (tube par exemple) contenant l'échantillon (le récipient fermé contenant l'échantillon est sorti à l'air mais il reste sous atmosphère inerte).

La durée du traitement thermique (a2 et/ou b2) n'inclut pas la durée de chauffe ou de refroidissement.

Les conditions du traitement thermique des étapes a2) et b2) sont indépendantes. En d'autres termes, la vitesse de chauffe, la durée et la température du traitement thermique, et la vitesse de refroidissement relatives au borate de manganèse ne sont pas nécessairement les mêmes que celles relatives au borate de cobalt.

En outre, les conditions de traitement thermique, relatives à l'atmosphère inerte ou oxydante, sont adaptées à la réactivité des composés de manganèse et de cobalt. Cette différence de conditions dans les étapes a2) et b2) permet d'obtenir ultérieurement le composé de formule LiMnₓCo₁₋ₓBO₃ (avec 0 < x < 1) cristallin et monoclinique.

L'absence de conditions spécifiques à la formation de chacun de ces borates ne permet pas la formation de ce composé.

Une fois les étapes a) et b) réalisées, le borate de manganèse et le borate de cobalt sont mélangés (et avantageusement broyés) en présence d'un précurseur de lithium et d'acide borique (étape c)).

L'homme du métier saura ajuster les quantités respectives de ces composés afin d'obtenir le matériau de formule LiMnₓCo₁₋ₓBO₃ (avec 0 < x < 1).

Selon un mode de réalisation particulier, le mélange de l'étape c) peut comprendre, pour une mole de lithium :
- 0,01 à 0,5 moles de borate de manganèse, avantageusement 0,03 à 0,35 moles;
- 0,01 à 0,5 moles de borate de cobalt, avantageusement 0,03 à 0,35 moles ;
- 0,001 à 0,5 moles d'acide borique, avantageusement 0,01 à 0,35 moles.

De manière avantageuse, le précurseur de lithium peut être le carbonate de lithium (Li₂CO₃) ou l'hydroxyde de lithium (LiOH sous sa forme hydratée ou non). Il peut également s'agir d'un mélange de ces composés.

Le broyage optionnel précédant l'étape d) est avantageusement réalisé dans un broyeur à billes. Dans ce cas, la vitesse de rotation du broyeur est avantageusement comprise entre 100 et 900 tours/minute, plus avantageusement entre 250 et 750 tours/minute.

La durée du broyage optionnel précédant l'étape d) est avantageusement comprise entre 0,5 et 24 heures, plus avantageusement entre 1 et 12 heures.

Le broyage optionnel précédant l'étape d) permet d'obtenir une poudre homogène dont le diamètre moyen de grain est avantageusement compris entre 0,1 et 30 micromètres, plus avantageusement entre 0,5 et 10 micromètres.

Le mélange résultant de l'étape c) (éventuellement broyé) est ensuite traité thermiquement (étape d).

La température du traitement thermique de l'étape d) est avantageusement comprise entre 300 et 900°C, plus avantageusement entre 400 et 700°C, et encore plus avantageusement entre 400 et 600°C. Elle peut notamment être comprise entre 400 et 550°C lorsque le traitement thermique est une trempe thermique telle que décrite ci-après.

La vitesse de chauffe est avantageusement comprise entre 1 et 20°C/minute, plus avantageusement entre 2 et 10°C/minute.

Comme déjà indiqué, le traitement thermique de l'étape d) est réalisé sous atmosphère inerte, par exemple sous argon, ou sous azote. De manière préférentielle, il est réalisé sous argon.

La durée du traitement thermique de l'étape d) est avantageusement comprise entre 15 et 1200 minutes, plus avantageusement entre 30 et 1200 minutes, et encore plus avantageusement entre 45 et 180 minutes. Elle peut notamment être égale à 120 minutes.

De manière avantageuse, le traitement thermique peut être une étape de trempe thermique, c'est-à-dire un traitement ne comprenant pas de montée en température progressive. Dans ces conditions, la durée du traitement thermique peut être avantageusement comprise entre 15 et 120 minutes, notamment entre 400 et 550°C.

A l'issue de l'étape d), le matériau est refroidi. La vitesse de refroidissement est avantageusement comprise entre 2 et 20°C/minute, plus avantageusement entre 5 et 10°C/minute, jusqu'à atteindre la température ambiante.

De manière avantageuse, le refroidissement est une étape de trempe à l'air du récipient (tube par exemple) contenant l'échantillon (le récipient fermé contenant l'échantillon est sorti à l'air mais il reste sous atmosphère inerte), c'est-à-dire un traitement ne comprenant pas de baisse de température progressive. Il s'agit alors du passage instantané de la température de traitement thermique à la température ambiante.

La durée du traitement thermique de l'étape d) n'inclut pas la durée de chauffe ou de refroidissement.

Le produit final obtenu à l'étape e) est un matériau de formule LiMnₓCo₁₋ₓBO₃ dans laquelle x est strictement supérieur à 0 et strictement inférieur à 1. En d'autres termes, le matériau comprend nécessairement du manganèse et du cobalt.

Il s'agit d'un matériau cristallin qui cristallise dans une maille monoclinique.

Le diamètre moyen des agglomérats obtenus après traitement thermique de l'étape d) est avantageusement compris entre 0,5 et 10 micromètres, plus avantageusement entre 0,5 et 5 micromètres. Il dépend notamment de la nature du traitement thermique. Il est avantageusement compris entre 1 et 5 micromètres dans le cas de la trempe thermique, alors qu'il est avantageusement compris 4 et 10 micromètres lorsque le traitement thermique ne correspond pas à une étape de trempe.

Le diamètre moyen des particules primaires constituant les agglomérats et obtenues après traitement thermique de l'étape d) est avantageusement compris entre 0,1 et 1 micromètre, plus avantageusement entre 0,1 et 0,5 micromètre. Il dépend notamment de la nature du traitement thermique. Il est avantageusement compris entre 0,1 et 0,4 micromètre dans le cas de la trempe thermique, alors qu'il est avantageusement compris 0,5 et 1 micromètre lorsque le traitement thermique ne correspond pas à une étape de trempe.

Selon un mode de réalisation avantageux, le procédé comprend les étapes suivantes :
a) préparation d'un borate de manganèse à partir d'un composé de manganèse et d'un composé de bore, par trempe thermique sous atmosphère inerte à une température comprise entre 600 et 750 °C pendant une durée comprise entre 5 et 20 minutes ;
b) préparation d'un borate de cobalt à partir d'un composé de cobalt et d'un composé de bore, par trempe thermique sous atmosphère oxydante à une température comprise entre 700 et 850 °C pendant une durée comprise entre 5 et 20 minutes ;
c) préparation et broyage d'un mélange contenant le borate de manganèse, le borate de cobalt, un précurseur de lithium et de l'acide borique ;
d) trempe thermique du mélange sous atmosphère inerte, à une température comprise entre 400 et 550 °C pendant une durée comprise entre 15 et 120 minutes ;
e) obtention du matériau de formule LiMnₓCo₁₋ₓBO₃, avec 0<x<1.

Comme déjà indiqué, la présente invention concerne également l'utilisation du matériau LiMnₓCo₁₋ₓBO₃ (0 < x < 1) en tant que matériau d'électrode, et notamment de cathode dans une batterie-lithium ion. Elle concerne également une batterie lithium-ion comprenant une cathode dans laquelle le matériau électroniquement actif est le matériau LiMnₓCo₁₋ₓBO₃ (0 < x < 1).

L'homme du métier saura mettre en oeuvre les techniques conventionnelles pour préparer cette cathode, notamment par dépôt du matériau sur un collecteur de courant.

A titre d'exemple, il peut s'agir du dépôt d'une encre contenant le matériau actif d'électrode préalablement broyé en présence d'un conducteur électronique. Typiquement, les conducteurs électroniques utilisés sont des fibres de carbone déposées en phase vapeur (VGCF de l'acronyme anglais « *vapour grown carbon fibers* »), ou plus avantageusement du noir de carbone tel que le Ketjenblack®.

L'invention et les avantages qui en découlent ressortiront mieux des figures et exemples suivants donnés afin d'illustrer l'invention et non de manière limitative.

### DESCRIPTION DES FIGURES

La figure 1 correspond aux diffractogrammes des composés LiMnₓCo₁₋ₓBO₃ lorsque x = 0 ; 0,3 ; 0,5 ; 0,7 ; et 1.
La figure 2 correspond à une vue agrandie des diffractogrammes des composés LiMnₓCo₁₋ₓBO₃ lorsque x = 0 ; 0,3 ; 0,5 ; 0,7 ; et 1.
La figure 3 est une image obtenue par microscopie à balayage électronique (MEB) du composé LiMn_{0,5}CO_{0,5}BO₃ selon un mode de réalisation particulier de l'invention.
La figure 4 correspond au graphe de la capacité spécifique réversible du composé LiMnₓCo₁₋ₓBO₃ (x = 0 ; 0,3 ; 0,5 ; 0,7 ; et 1) en fonction du nombre de cycles.
La figure 5 est une image obtenue par microscopie à balayage électronique (MEB) du composé LiMn_{0,7}Co_{0,3}BO₃ selon un mode de réalisation particulier de l'invention.
La figure 6 est une image obtenue par microscopie à balayage électronique (MEB) du composé LiMn_{0,7}Co_{0,3}BO₃ selon un mode de réalisation particulier de l'invention.
La figure 7 correspond au diffractogramme du composé LiMn_{0,7}Co_{0,3}BO₃ selon deux modes de réalisation particuliers de l'invention.
La figure 8 correspond au cyclage galvanostatique à C/20 pour le composé LiMn_{0,7}Co_{0,3}BO₃ obtenu selon deux modes de réalisation de l'invention.
La figure 9 correspond à la capacité spécifique réversible du composé LiMn_{0,7}Co_{0,3}BO₃ obtenu selon deux modes de réalisation de l'invention.
La figure 10 correspond au diffractogramme du contre-exemple de la synthèse du composé LiMn_{0,7}CO_{0,3}BO₃.
La figure 11 correspond aux voltampérogrammes des composés LiMnBO₃, LiMn_{0,5}CO_{0,5}BO₃ et LiCoBO₃.

### EXEMPLES DE REALISATION DE L'INVENTION

Des composés de formule LiMnₓCo₁₋ₓBO₃ ont été préparés selon deux modes de réalisation de l'invention (procédés A et B) et selon un procédé correspondant à un contre-exemple (procédé C).

### 1/ Procédé A : préparation du composé LiMnₓCo₁₋ₓBO₃ (x = 0 ; 0,3 ; 0,5 ; 0,7 ; 1)

Le composé LiMnₓCo₁₋ₓBO₃ a été préparé selon les étapes suivantes :
a) préparation d'un borate de manganèse à partir d'un composé de manganèse et d'un composé de bore ;
b) préparation d'un borate de cobalt à partir d'un composé de cobalt et d'un composé de bore ;
c) préparation et broyage d'un mélange contenant le borate de manganèse, le borate de cobalt, un précurseur de lithium et de l'acide borique
d) traitement thermique du mélange sous atmosphère inerte ;
e) obtention du matériau de formule LiMnₓCo₁₋ₓBO₃, avec 0<x<1.

### - Etape a) :

Dans un broyeur à billes, 6,76 g de MnC₂O₄.2H₂O et 1,32 g de B₂O₃ sont dispersés dans du cyclohexane. Le mélange est broyé à une vitesse de 500 tours/minute pendant 5 heures. Le broyeur utilisé est un broyeur planétaire (Retsch) contenant 10 billes en acier inoxydable. Le cyclohexane est ensuite évaporé à l'air.

Ce mélange-broyat (manganèse/bore) est traité thermiquement à 700°C pendant 6 heures (vitesse de chauffe de 5°C/min) sous atmosphère inerte.

Le borate de manganèse ainsi obtenu est ensuite refroidi graduellement avec une température de refroidissement égale à 10°C/minute jusqu'à atteindre 25°C.

### - Etape b) :

Parallèlement, dans un autre broyeur à billes, 7,32 g de COC₂O₄.2H₂O et 1,39 g de B₂O₃ sont dispersés dans du cyclohexane. Le mélange est broyé à une vitesse de 500 tours/minute pendant 5 heures. Le broyeur utilisé est un broyeur planétaire (Retsch) contenant 10 billes en acier inoxydable. Le cyclohexane est ensuite évaporé à l'air.

Ce mélange-broyat (cobalt/bore) est traité thermiquement à 800°C pendant 6 heures (vitesse de chauffe égale à 5°C/min) sous atmosphère oxydante. Le borate de cobalt ainsi obtenu est ensuite refroidi graduellement avec une température de refroidissement égale à 10°C/minute jusqu'à atteindre 25°C.

### - Etape c) :

0,86 g du borate de manganèse et 0,80 g du borate de cobalt obtenus sont mélangés avec 0,63 g de Li₂CO₃ et 0,17 g de H₃BO₃ dans un broyeur à billes. Le mélange est dispersé dans du cyclohexane puis broyé à une vitesse de 500 tours/minute pendant 5 heures. Le broyeur utilisé est un broyeur planétaire (Retsch) contenant 10 billes en acier inoxydable. Le cyclohexane est ensuite évaporé à l'air.

### - Etapes d) et e) :

Le mélange-broyat résultant de l'étape c) est traité thermiquement sous argon, à 500°C pendant 6 heures (vitesse de chauffe égale à 5°C/min).

Le composé LiMn_{0,5}CO_{0,5}BO₃ ainsi obtenu est ensuite refroidi graduellement avec une température de refroidissement égale à 10°C/minute jusqu'à atteindre 25°C.

En adaptant les quantités de composés mis en oeuvre, les matériaux LiMnₓCo₁₋ₓBO₃ avec x = 0 ; 0,3 ; 0,7 ; 1 ont été préparés de la même manière.

**Masses utilisées pour l'étape c) pour les matériaux LiMnₓCo₁₋ₓBO₃**

| x | borate de Mn | borate de Co | carbonate de lithium | acide borique |
|---|---|---|---|---|
| 0,3 | 0,51 g | 1,10 g | 0,63 g | 0,23 g |
| 0,5 | 0,86 g | 0,80 g | 0,63 g | 0,17 g |
| 0,7 | 1,22 g | 0,48 g | 0,63 g | 0,10 g |

### 2/ Procédé B : synthèse de LiMn_{0,7}Co_{0,3}BO₃ par trempe thermique

Le procédé B comprend les mêmes étapes que le procédé A mais en réduisant la durée des traitements thermiques. Il s'agit dans ce cas d'une trempe thermique.

### - Etape a) :

Dans un broyeur à billes, 6,76 g de MnC₂O₄.2H₂O et 1,32 g de B₂O₃ sont dispersés dans du cyclohexane. Le mélange est broyé à une vitesse de 500 tours/minute pendant 5 heures. Le broyeur utilisé est un broyeur planétaire (Retsch) contenant 10 billes en acier inoxydable. Le cyclohexane est ensuite évaporé à l'air.
Ce mélange-broyat (manganèse/bore) est traité thermiquement à 700°C pendant 15 minutes sous atmosphère inerte (trempe à l'air).

### - Etape b) :

Parallèlement, dans un autre broyeur à billes, 7,32 g de CoC₂O₄.2H₂O et 1,39 g de B₂O₃ sont dispersés dans du cyclohexane. Le mélange est broyé à une vitesse de 500 tours/minute pendant 5 heures. Le broyeur utilisé est un broyeur planétaire (Retsch) contenant 10 billes en acier inoxydable. Le cyclohexane est ensuite évaporé à l'air.

Ce mélange-broyat (cobalt/bore) est traité thermiquement à 800°C pendant 15 minutes sous atmosphère oxydante.

### - Etape c) :

1,22 g du borate de manganèse et 0,48 g du borate de cobalt obtenus sont dispersés dans du cyclohexane avec 0,63 g de Li₂CO₃ et 0,10 g de H₃BO₃ dans un broyeur à billes. Le mélange est broyé à une vitesse de 500 tours/minute pendant 5 heures. Le broyeur utilisé est un broyeur planétaire (Retsch) contenant 10 billes en acier inoxydable. Le cyclohexane est ensuite évaporé à l'air.

### - Etapes d) et e) :

Le mélange-broyat résultant de l'étape c) est traité thermiquement sous argon, à 500°C pendant 1 heure et 15 minutes (sans subir la montée en température et avec une trempe à l'air).

### 3/ Tests électrochimiques

### a) Préparation de l'électrode positive

Le matériau actif LiMnₓCo₁₋ₓBO₃ est mélangé à 85% en poids avec un carbone de grande surface spécifique (Ketjen black JD600) (15% en poids) pendant 4 heures à 500 tours par minute dans un bol de 50 mL contenant 10 billes en acier inoxydable à l'aide d'un broyeur planétaire (Retsch).

Ensuite, le produit obtenu est mélangé à 90% en poids à du polyfluorure de vinylidène (10% en poids) dissous dans de la N-méthyl-2-pyrrolidone.

Enfin, le mélange est enduit sur une feuille d'aluminium (100 micromètres d'épaisseur) puis séché à 60°C.

L'électrode est alors composée de 76,5% en poids de matière active; 13,5% en poids de carbone et 10% en poids de polyfluorure de vinylidène (PVDF).

### b) Montage de l'accumulateur

L'électrode positive ainsi réalisée est introduite dans une cellule type « pile bouton » au format 2032. L'électrode négative est constituée de lithium métallique.

Deux types de séparateurs sont utilisés : l'un constitué d'un film de polypropylène (Celgard® 2400) et l'autre en polyoléfine (Viledon®).

L'électrolyte utilisé est composé de carbonate d'éthylène, de carbonate de propylène, de carbonate de diméthyle et d'hexafluorophosphate de lithium (LiPF₆) (Electrolyte LP100).

### c) Cyclage galvanostatique

A température ambiante, un courant est imposé au système afin d'obtenir un régime de C/20, c'est-à-dire l'extraction/insertion d'un ion lithium en 20 heures.

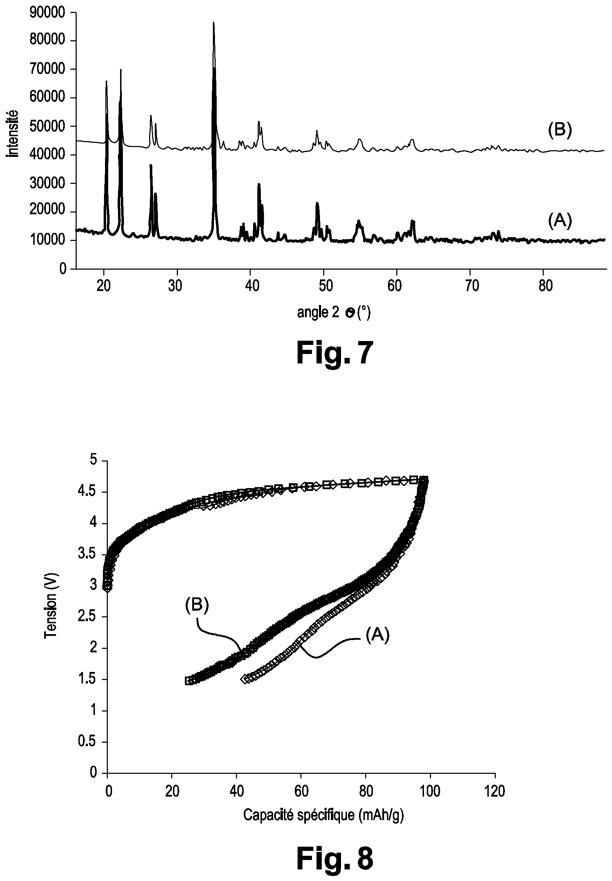

La figure 8 illustre la capacité spécifique en fonction de la tension pour une électrode positive selon le procédé A ou selon le procédé B.

### 4/ Caractérisation du composé LiMnₓCo₁₋ₓBO₃

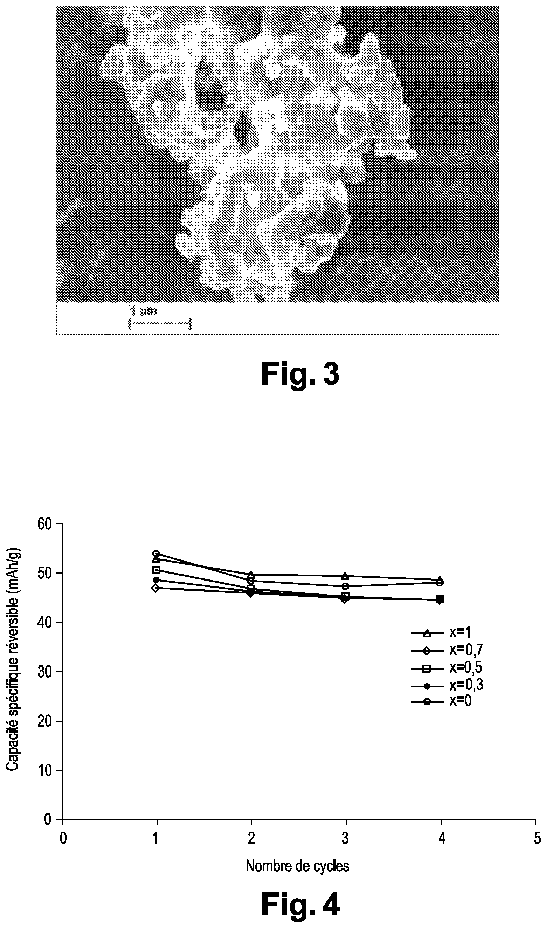

La figure 3 correspond à une image obtenue par microscopie à balayage électronique (MEB) du composé LiMn_{0,5}CO_{0,5}BO₃ (x = 0,5) obtenu selon le procédé A.

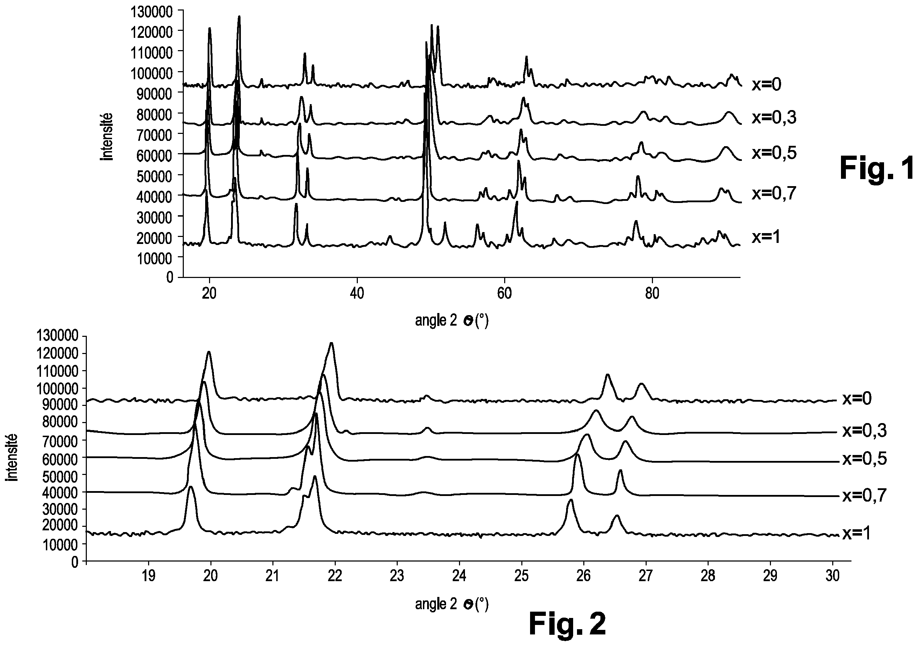

Les figures 1 et 2 montrent les diffractogrammes (rayons X) des composés selon l'invention (LiMnₓCo₁₋ₓBO₃ avec x = 0,3 ; 0,5 ; 0,7 obtenus selon le procédé A) en comparaison avec le composé contenant uniquement du manganèse (x = 1), LiMnBO₃, et le composé contenant uniquement du cobalt (x = 0), LiCoBO₃ obtenus selon le procédé A.

Ces diffractogrammes montrent la conservation de la structure du matériau lorsque x varie entre 0 et 1. L'évolution des paramètres de maille du matériau LiMnₓCo₁₋ₓBO₃ varie linéairement avec l'insertion de cobalt dans le matériau.

La figure 4 correspond au graphe de la capacité spécifique réversible du composé LiMnₓCo₁₋ₓBO₃ (x = 0 ; 0,3 ; 0,5 ; 0,7 ; et 1), obtenu selon le procédé A, en fonction du nombre de cycles.

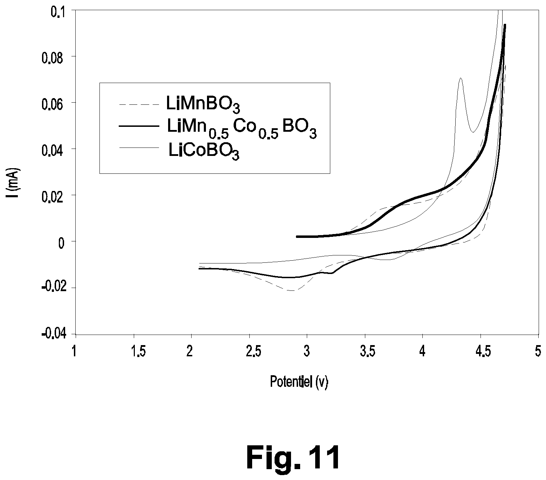

La substitution partielle du manganèse par le cobalt dans le matériau LiMnₓCo₁₋ₓBO₃ permet d'augmenter le potentiel de réaction du matériau. En effet, les potentiels moyens en décharge des matériaux LiMnBO₃, LiMn_{0,5}CO_{0,5}BO₃ et LiCoBO₃ sont respectivement 2,8V ; 3V et 3,1V (figure 11).

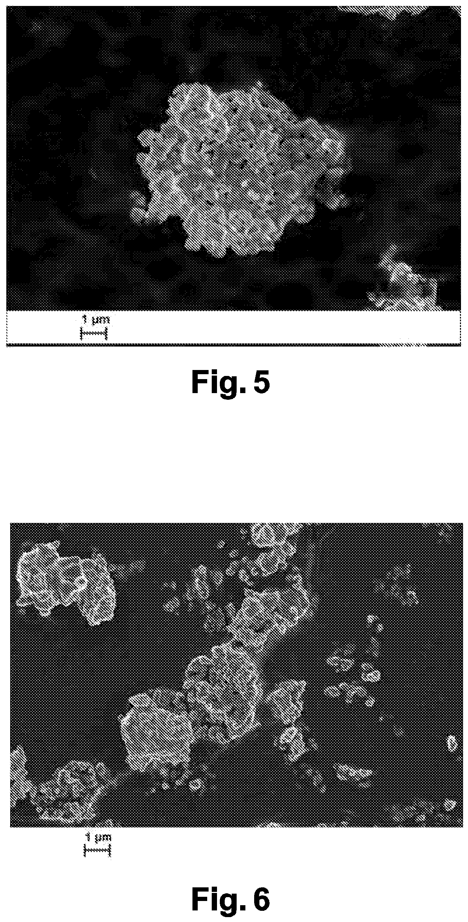

Les figures 5 et 6 montrent que le procédé B (trempe, figure 6) permet d'obtenir des particules/agglomérats de taille inférieure par rapport au procédé A (traitement thermique plus long, figure 5).

La figure 7 correspond au diffractogramme du composé LiMn_{0,7}Co_{0,3}BO₃ obtenu selon le procédé A ou le procédé B.

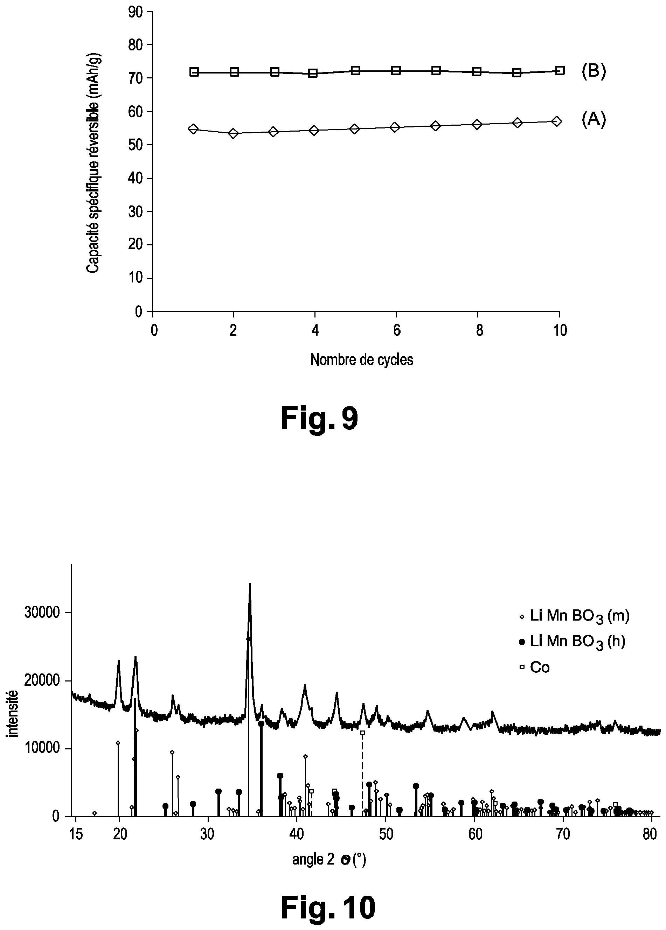

Le procédé B permet d'obtenir des particules/agglomérats ayant une taille inférieure, mais aussi une capacité spécifique réversible plus importante au 1^{er} cycle (54 vs. 70 mAh/g) et une meilleure stabilité en cyclage, la capacité réversible initiale étant conservée sur 10 cycles (figure 9).

Les procédés A et B correspondent à deux modes de réalisation de la présente invention. Ils permettent de synthétiser séparément les borates de manganèse et de cobalt type tel que M₃B₂O₆ (M = Mn ou Co). Cette synthèse en multi-étapes permet de stabiliser le cobalt à l'état d'oxydation II+ lors de la formation des composés mixtes LiMnₓCo₁₋ₓBO₃.

### 5/ Procédé C : contre-exemple : synthèse de LiMn_{0,7}Co_{0,3}BO₃ en une seule étape

Dans ce procédé, MnC₂O₄.2H₂O et Co(OH)₂ sont en proportion stoechiométrique pour obtenir le composé LiMn_{0,7}Co_{0,3}BO₃. Les précurseurs LiOH.H₂O et H₃BO₃ sont en léger excès.

Ces précurseurs sont dispersés dans du cyclohexane et mélangés cinq heures à 500 tours par minute dans un bol de 50 ml contenant 10 billes en inox à l'aide d'un broyeur planétaire (Retsch). Le cyclohexane est évaporé à l'air.

Un traitement thermique est ensuite réalisé dans un creuset en alumine sous argon à 500°C pendant 40 minutes.

Le diffractogramme de la figure 10 montre que le composé LiMn_{0,7}Co_{0,3}BO₃ n'a pas été obtenu, mais qu'il y a les deux polymorphes de LiMnBO₃ ainsi que du cobalt métallique.

Par conséquent, le procédé C ne permet pas d'obtenir le composé LiMnₓCo₁₋ₓBO₃ étant donné que le cobalt en état d'oxydation II+ est réduit en cobalt métallique lors du traitement thermique. Ce procédé ne permet pas de substituer partiellement le manganèse avec du cobalt.

## Revendications

1. Matériau d'électrode de formule LiMnₓCo₁₋ₓBO₃, dans laquelle 0 < x < 1.

2. Matériau d'électrode selon la revendication 1, ***caractérisé* en ce que** 0 < x ≤ 0,7.

3. Procédé de préparation par voie solide d'un matériau de formule LiMnₓCo₁₋ₓBO₃, avec 0<x<1, comprenant les étapes suivantes :
a) préparation d'un borate de manganèse à partir d'un composé de manganèse et d'un composé de bore par :
a1) broyage d'un mélange d'un composé de manganèse et d'un composé de bore ;
a2) traitement thermique du mélange ainsi obtenu, sous atmosphère inerte, à une température comprise entre 300 et 900°C ;
b) préparation d'un borate de cobalt à partir d'un composé de cobalt et d'un composé de bore par :
b1) broyage d'un mélange d'un composé de cobalt et d'un composé de bore ;
b2) traitement thermique du mélange ainsi obtenu, sous atmosphère oxydante, à une température comprise entre 300 et 1000°C ;
c) préparation d'un mélange contenant le borate de manganèse, le borate de cobalt, un précurseur de lithium et de l'acide borique ;
d) traitement thermique du mélange sous atmosphère inerte ;
e) obtention d'un matériau de formule LiMnₓCo₁₋ₓBO₃, avec 0<x<1 ;

4. Procédé selon la revendication 3, ***caractérisé* en ce que** le composé de manganèse est choisi dans le groupe comprenant : oxalate de manganèse ; carbonate de manganèse ; et oxyde de manganèse (II).

5. Procédé selon la revendication 3 ou 4, ***caractérisé* en ce que** le composé de cobalt est choisi dans le groupe comprenant : oxalate de cobalt ; carbonate de cobalt ; et oxyde de cobalt (II).

6. Procédé selon l'une des revendications 3 à 5, ***caractérisé* en ce que** le composé de bore est l'oxyde de bore ou l'acide borique.

7. Procédé selon l'une des revendications 3 à 6, ***caractérisé* en ce que** le précurseur de lithium est le carbonate de lithium ou l'hydroxyde de lithium.

8. Procédé selon l'une des revendications 3 à 7, ***caractérisé* en ce que** le traitement thermique de l'étape d) est réalisé à une température comprise entre 300 et 900°C, avantageusement entre 400 et 700°C, pendant une durée comprise entre 30 et 1200 minutes.

9. Procédé selon l'une des revendications 3 à 8, ***caractérisé* en ce qu'**il comprend les étapes suivantes :
a) préparation d'un borate de manganèse à partir d'un composé de manganèse et d'un composé de bore, par trempe thermique sous atmosphère inerte à une température comprise entre 600 et 750 °C pendant une durée comprise entre 5 et 20 minutes ;
b) préparation d'un borate de cobalt à partir d'un composé de cobalt et d'un composé de bore, par trempe thermique sous atmosphère oxydante à une température comprise entre 700 et 850 °C pendant une durée comprise entre 5 et 20 minutes ;
c) préparation et broyage d'un mélange contenant le borate de manganèse, le borate de cobalt, un précurseur de lithium et de l'acide borique ;
d) trempe thermique du mélange sous atmosphère inerte, à une température comprise entre 400 et 550 °C pendant une durée comprise entre 15 et 120 minutes ;
e) obtention d'un matériau de formule LiMnₓCo₁₋ₓBO₃, avec 0<x<1.

10. Batterie lithium ion comprenant une cathode dans laquelle le matériau électroniquement actif est le matériau selon la revendication 1 ou 2.

## Patentansprüche

1. Elektrodenmaterial mit der Formel LiMnₓCo₁₋ₓBO₃, bei dem 0 < x < 1.

2. Elektrodenmaterial gemäß Anspruch 1, **dadurch gekennzeichnet, dass** 0 < x < 0,7.

3. Verfahren zur Herstellung durch ein Verfahren in festem Zustand eines Materials mit der Formel LiMnₓCo₁₋ₓBO₃, mit 0 < x < 1, das die folgenden Schritte umfasst:
a) Herstellung eines Manganborats mittels einer Manganverbindung und einer Borverbindung durch:
a1) Zerkleinern einer Mischung aus einer Manganverbindung und einer Borverbindung;
a2) Wärmebehandlung der so erhaltenen Mischung in einer inerten Atmosphäre bei einer Temperatur zwischen 300 und 900°C;
b) Herstellung eines Kobaltborats mittels einer Kobaltverbindung und einer Borverbindung durch:
b1) Zerkleinern einer Mischung aus einer Kobaltverbindung und einer Borverbindung;
b2) Wärmebehandlung der so erhaltenen Mischung in einer inerten Atmosphäre bei einer Temperatur zwischen 300 und 1.000°C;
c) Herstellung einer Mischung, die das Manganborat, das Kobaltborat, einen Lithiumvorläufer und Borsäure enthält;
d) Wärmebehandlung der Mischung in einer inerten Atmosphäre,
e) Erhalt eines Elektrodenmaterials mit der Formel LiMnₓCo₁₋ₓBO₃, bei dem 0 < x < 1.

4. Verfahren gemäß Anspruch 3, **dadurch gekennzeichnet, dass** die Manganverbindung aus der Gruppe ausgewählt wird, zu der Manganoxalat, Mangankarbonat und Mangan (II)-oxid gehören.

5. Verfahren gemäß Anspruch 3 oder 4, **dadurch gekennzeichnet, dass** die Kobaltverbindung aus der Gruppe ausgewählt wird, zu der Kobaltoxalat, Kobaltkarbonat und Kobalt (II)-oxid gehören.

6. Verfahren gemäß einem der Ansprüche 3 bis 5, **dadurch gekennzeichnet, dass** es sich bei der Borverbindung um Boroxid oder Borsäure handelt.

7. Verfahren gemäß einem der Ansprüche 3 bis 6, **dadurch gekennzeichnet, dass** es sich bei dem Lithiumvorläufer um Lithiumkarbonat oder Lithiumhydroxid handelt.

8. Verfahren gemäß einem der Ansprüche 3 bis 7, **dadurch gekennzeichnet, dass** die Wärmebehandlung aus Schritt d) bei einer Temperatur zwischen 300 und 900°C, noch besser zwischen 400 und 700°C, während einer Dauer von 30 bis 1.200 Minuten durchgeführt wird.

9. Verfahren gemäß einem der Ansprüche 3 bis 8, **dadurch gekennzeichnet, dass** es die folgenden Schritte umfasst:
a) Herstellung eines Manganborats mittels einer Manganverbindung und einer Borverbindung durch thermisches Härten in inerter Atmosphäre, bei einer Temperatur zwischen 600 und 750 °C, während einer Dauer zwischen 5 und 20 Minuten.
b) Herstellung eines Kobaltborats mittels einer Kobaltverbindung und einer Borverbindung durch thermisches Härten in inerter Atmosphäre, bei einer Temperatur zwischen 700 und 850 °C während einer Dauer von 5 bis 20 Minuten.
c) Herstellung und Zerkleinerung einer Mischung, die das Manganborat, das Kobaltborat, einen Lithiumvorläufer und Borsäure enthält;
d) thermisches Härten der Mischung in inerter Atmosphäre bei einer Temperatur zwischen 400 und 550 °C während einer Dauer von 15 bis 120 Minuten;
e) Erhalt eines Materials mit der Formel LiMnₓCo₁₋ₓBO₃, bei dem 0 < x < 1.

10. Lithium-Ionenbatterie mit einer Kathode, in der das elektronisch aktive Material das Material gemäß Anspruch 1 oder 2 ist.

## Claims

1. An electrode material of formula LiMnₓCo₁₋ₓBO₃, where 0 < x < 1.

2. The electrode material of claim 1, ***characterized* in that** 0 < x ≤ 0.7.

3. A method of solid-state preparation of a material of formula LiMnₓCo₁₋ₓBO₃, with 0 < x < 1, comprising the steps of:
a) preparing a manganese borate from a manganese compound and a boron compound by:
a1) milling of a mixture of a manganese compound and of a boron compound;
a2) thermal treatment of the mixture thus obtained, under an inert atmosphere, at a temperature in the range from 300 to 900°C;
b) preparing a cobalt borate from a cobalt compound and a boron compound by:
b1) milling of a mixture of a cobalt compound and of a boron compound;
b2) thermal treatment of the mixture thus obtained, under an oxidizing atmosphere, at a temperature in the range from 300 to 1,000 °C;
c) preparing a mixture containing the manganese borate, the cobalt borate, a precursor of lithium, and boric acid;
d) thermally treating the mixture under an inert atmosphere;
e) obtaining a material of formula LiMnₓCo₁₋ₓBO₃, with 0 < x < 1.

4. The method of claim 3, ***characterized* in that** the manganese compound is selected from the group comprising: manganese oxalate; manganese carbonate; and manganese oxide (II).

5. The method of claim 3 or 4, ***characterized* in that** the cobalt compound is selected from the group comprising: cobalt oxalate; cobalt carbonate; and cobalt oxide (II).

6. The method of any of claims 3 to 5, ***characterized* in that** the boron compound is boron oxide or boric acid.

7. The method of any of claims 3 to 6, ***characterized* in that** the lithium precursor is lithium carbonate or lithium hydroxide.

8. The method of any of claims 3 to 7, ***characterized* in that** the thermal treatment of step d) is carried out at a temperature in the range from 300 to 900°C, advantageously from 400 to 700°C, for a duration in the range from 30 to 1,200 minutes.

9. The method of any of claims 3 to 8, ***characterized* in that** it comprises the steps of:
a) preparing a manganese borate from a manganese compound and a boron compound, by thermal quenching under an inert atmosphere at a temperature in the range from 600 to 750°C for a duration in the range from 5 to 20 minutes;
b) preparing a cobalt borate from a cobalt compound and a boron compound, by thermal quenching under an oxidizing atmosphere at a temperature in the range from 700 to 850 °C for a duration in the range from 5 to 20 minutes;
c) preparing and milling a mixture containing the manganese borate, the cobalt borate, a precursor of lithium, and boric acid;
d) thermally quenching the mixture under an inert atmosphere, at a temperature in the range from 400 to 550°C for a duration in the range from 15 to 120 minutes;
e) obtaining a material of formula LiMnₓCo₁₋ₓBO₃, with 0 < x < 1.

10. A lithium-ion battery comprising a cathode, wherein the electronically-active material is the material of claim 1 or 2.
